# EUROPEAN PATENT SPECIFICATION

(11) **EP 0 526 214 B1**
(45) Date of publication and mention of the grant of the patent: **17.03.1999**
(21) Application number: 92306969.4
(22) Date of filing: 30.07.1992
(51) Int. Cl.: C07G 17/00, C10M 135/04

(54) **Process for polysulfurized polyalkylene product**
Verfahren zur Herstellung von polysulfurierten Polyalkylenprodukten
Procédé pour la préparation d'un produit polyalcylène polysulfuré

(30) Priority: 01.08.1991 US 739092
(43) Date of publication of application: 03.02.1993
(73) Proprietor: ETHYL PETROLEUM ADDITIVES, INC., Richmond, Virginia 23219-4304 (US)
(72) Inventor: Harris, Peggy Jo, Belleville, Illinois 62223 (US); Richardson, Clive Ralph, Wokingham, Berkshire RG11 1TE (GB)
(74) Representative: Cresswell, Thomas Anthony

(56) References cited:
- EP-A- 0 159 936
- EP-A- 0 293 299
- EP-A- 0 381 350
- GB-A- 1 308 894
- US-A- 2 497 138
- US-A- 4 954 274

## Description

This invention relates to a process for preparing, in high yield, a polysulfurized polyalkylene product for use in lubricating oil compositions having a chlorine content of less than 1000 ppm and a sulfur content of more than about 30 weight per cent, for example from 40 to 50 weight percent. The product typically has a viscosity at 100°C of less than about 20 cSt.

A number of methods for the preparation of sulfurized olefin products that can be used as additives for lubricants are described in the prior art.

Myers, U.S. 3,471,404, describes a process for the preparation of stable non-corrosive organosulfur compounds which are substantially monomeric. The monomeric organosulfur compounds are prepared by reacting the adduct formed from the reaction between an olefin and sulfur monochloride with an alkali metal sulfide and free sulfur in the presence of an alcohol or an alcohol-water solvent under reflux conditions. Subsequently, the polysulfurized olefin is contacted with an organic base in a water solution to remove chlorine to less than about 0.5 weight percent.

Papay *et al.*, U.S. 4,204,969, describe a method for the preparation of olefin polysulfides comprising the steps of reacting sulfur monochloride with a C₃-C₆ aliphatic monoolefin in the presence of a promoter consisting of a lower alcohol (preferably isopropanol) in order to form an adduct. The adduct is then reacted with sulfur or sodium sulfide in a ratio of 0.1 to 0.4 gram-atom of sulfur per mole of sodium sulfide in an aqueous alcoholic medium at a temperature ranging from 50°C to the reflux temperature. The mixture is held at reflux for 2-8 hours to assure complete reaction. After the reflux period, the alcohol is distilled from the mixture and the product recovered by conventional methods.

In addition, Borne *et al*., U.S. 4,645,610 disclose a method for the preparation of olefin polysulfides comprising contacting an addition product produced by the reaction of at least one aliphatic monoolefin containing 2 to 5 carbon atoms and sulfur monochloride or dichloride with a hydrocarbyl halide and at least one sulfur compound selected from sulfides, hydrosulfides and polysulfides of alkali metals, ammonium or alkaline-earth metals and usually elemental sulfur in an aqueous or aqueous alcoholic medium at certain reaction conditions so as to obtain products whose kinematic viscosity is not too high. When an alcoholic reaction medium is used, the preferred alcohol is isopropanol. If necessary, the product is treated with an inorganic base subsequent to the formation reaction. The product thus obtained has a viscosity of 4 to 20 mm²/s and a halogen content of less than 1 weight percent.

Zaweski *et al*., U.S. 4,954,274, describe a process for obtaining sulfurized olefinic compounds which are soluble in both mineral and synthetic oils of lubrication viscosity. The first stage of the process is conducted by adding an olefin to sulfur monochloride in the presence of minor amounts of an active Lewis acid to form an adduct. The adduct from the first stage of the process is then reacted with sodium sulfide and sulfur in an aqueous alkanol reaction medium (preferably isopropanol) at a temperature of about 50°C up to reflux. After reaction of the adduct with sodium sulfide and sulfur, the product is recovered by conventional methods such as removing alkanol, water washing, vacuum drying and filtering.

EP-A-0381350 describes the preparation of a polysulphurised polyisobutylene by reacting a basic aqueous alcoholic solution of sodium sulfide with an adduct formed by adding olefin to sulfur monochloride. A mixture of isopropanol and tert-butanol is used as the aqueous alcoholic solution. There is no disclosure of preparing a polysulphurised polyisobutylene having a chlorine content of less than 1000 ppm. The only example illustrates preparation of a product having a chlorine content of 0.61%, i.e. 6100 ppm.

GB-A-1308894 discloses the preparation of polysulphurised polyolefin by sulfohalogenating an olefin or cyclo-olefin with sulfur halide in the presence of an aliphatic alochol and then sulfurizing and dehalogenating the intermediate product obtained. As alcohol isopropanol is disclosed. There is no disclosure of preparing a polysulphurised polyisobutylene having a chlorine content of less than 1000 ppm.

EP-A-0293299 describes preparing an olefin polysulfide composition by (1) reacting sulfur monochloride or sulfur dichloride with at least one aliphatic monoolefin of 2-12 carbon atoms, to form an addition product, (2) reacting hydrogen sulfide with sodium, potassium or ammonium hydroxide dissolved in an anhydrous C₁-C₄ aliphatic monoalcohol, (3) contacting the adduct formed in step (1) and a monohalogenated, saturated or unsaturated hydrocarbon compound, with the alcoholic solution obtained at the end of step (2), (4) heating the resultant mixture from step (3), removing the monoalcohol, while adding a sufficient water amount to maintain in solution the reactants and the inorganic products, and (5) after settling and removal of the aqueous phase, recovering the organic phase formed.

While the foregoing methods provide sulfurized olefin products which may be useful in lubricant mixtures, the chlorine content of the products of the foregoing processes is generally above 1000 ppm and often above 5000 ppm. There remains a need for a sulfurized olefin product having a substantially lower chlorine content yet containing the amount of sulfur desired and having acceptable copper corrosion and viscosity properties.

It has now been discovered that a polysulfurized polyalkylene product, having a chlorine content of less than 1000 ppm and containing more than 30 weight percent sulfur, preferably more than 35 weight percent sulfur and most preferably more than 40 weight percent sulfur, can be prepared by the process of the present invention. This process involves preparing, in high yield, a polysulphurised polyalkylene product having a chlorine content of less than 1000 ppm and a sulphur content of more than about 30 weight percent and comprises:
a) contacting an adduct of a sulphur halide and an olefin with a sulphur source in an alkaline aqueous medium comprising water and a lower alkanol having a boiling point of greater than about 85°C selected from n-propanol and a mixture of n-propanol and t-butanol; b) maintaining the so contacted adduct at reflux for a period of time which is of more than 1.5 hours and which is sufficient to form a mixture having an aqueous phase containing alkanol and water and an organic phase containing a polysulphurised polyalkylene product having a chlorine content of less than 1000 ppm; c) stripping the alkanol; and d) heating the organic phase to remove residual water to obtain, in high yield, the polysulphurised polyalkylene product.

Typically, the alkanol comprises 90 weight percent n-propanol and 10 weight percent t-butanol, the sulphur halide is sulphur monochloride and the olefin is isobutylene. Use of the alkaline aqueous medium in the process also forms part of the present invention.

Heretofore, polysulfurized polyalkylene product has been made by a process which, although effective in obtaining a product with the desired sulfur content, usually had a chlorine content of 4000 ppm or more. It has been discovered surprisingly, and quite unexpectedly, that utilizing a mixture containing an alcohol having a boiling point above a particular temperature for contacting the adduct of a sulfur halide and an olefin with a sulfur source has made a substantial difference in the amount of chlorine in the recovered polysulfurized polyalkylene product. Hence, the alcohol or mixture of alcohols thus selected to from the adduct contacting mixture is a key feature of this invention.

By high yield is meant greater than about 50 percent yield based on theoretical. For example, if about 500 grams of adduct are charged to a reaction vessel, more than about 250 grams of polysulfurized polyalkylene product are thus obtained.

The process of this invention also provides a polysulfurized polyalkylene product having an acceptable viscosity. Oftentimes, when the product is post-treated so as to reduce the chlorine content, the viscosity of the thus treated product increases. It is highly desirable that the product has a viscosity at 100°C of less than 20 cSt, preferably less than 15 cSt, and most preferably in a range of from 2 cSt to 10 cSt. These and other advantages will be evident from the ensuing description.

In another embodiment, the polysulfurized polyalkylene prepared in accordance with the present invention is used as a lubrication oil additive which imparts extreme pressure properties.

In accordance with the invention, the starting olefins may be the monoethylenically unsaturated aliphatic hydrocarbons referred to as aliphatic monoolefins containing 3 to about 6 carbon atoms. These include 1-butene, 2-butene, isobutene, 1-pentene, 2-pentene, 2-methyl-1-butene, 3-methyl-1-butene, 2-methyl-2-butene, 1-hexene, 2-hexene, 3-hexene, 2-methyl-1-pentene, 2-methyl-2-pentene, 2-ethyl-2-butene, and mixtures thereof.

Preferably, the olefins are branched chain olefins such as isobutene, 2-methyl-1-butene, 1-methyl-2-butene, and 2-methyl-2-pentene. More preferably, the ethylenically double bond adjoins a tertiary carbon atom as in isobutylene, the most preferred olefin.

The adduct of sulfur halide and olefin is preferably formed by adding olefin to a sulfur monochloride. The olefin can be added as a gas or liquid. Preferably, the olefin is added beneath the surface of the sulfur monochloride as a gas.

In practice, the olefin is added until the reaction with the sulfur monochloride stops as indicated by loss of exotherm. An amount of 0.45 - 2.0 gram moles of olefin per each 0.3 - 0.75 gram moles of sulfur monochloride usually suffices. A preferred amount is 1.7 - 2.2 gram moles of olefin per gram mole of sulfur monochloride.

Preferably, the adduct of olefin and sulfur monochloride is formed without adding an alkanol promoter, but the use of an alkanol promoter may be used if so desired. When used, the alkanol promoter is typically a lower alkanol having from 1 to 4 carbon atoms such as methanol, ethanol, n-propanol, isopropanol, isobutanol, and tert-butanol. The most preferred promoter is methanol.

The lower alkanol promoter, when desirably used, can be added to the sulfur monochloride initially, added to the reaction mixture continuously or periodically during the course of olefin addition or the alkanol can be mixed with the olefin and added together with the olefin. The preferred modes of addition are to either add the entire amount initially and then add the olefin or to concurrently add both alkanol and olefin.

The amount of alkanol promoter is desirably in a range of from 0.001 to 0.3 gram mole for each 0.3 - 0.75 gram mole of sulfur monochloride.

The adduct forming step can be conducted at any temperature high enough to cause the reaction to proceed, but not so high as to cause decomposition of the reactants or products. A useful range is -30° to 100°C. C. A more preferred range is -20 ° to 75 ° C and a most preferred range is 0 ° to 20°C C for lower viscosity products and 20° to 60°C for higher viscosity products. The lower viscosity products tend to be more soluble than the higher viscosity products in some lubricants and hence there is a need for a process which is flexible enough to produce either high or low viscosity products.

The adduct forming step should be conducted for a time sufficient to complete the reaction between the sulfur monochloride and olefin. This is usually limited by heat removal. Olefin feed rate is preferably controlled to hold the temperature within the desired range. When the sulfur monochloride has been consumed, the temperature will drop. External heat may be added to continue the reaction for a further time, but this does not appear to be necessary. The overall time required to complete the reaction depends upon the scale of the processing and can vary from a few minutes up to 12 hours or more. The time is not critical.

During the adduct forming step, HCl gas is evolved so means should be provided to scrub the vent gas from the reactor to remove HCl prior to releasing it from the atmosphere.

The sulfur source may be elemental sulfur, NaHS, Na₂S, Ag₂S, Bi₂S₃, CuS, Cu₂S, H₂S, MnS, or SnS. Preferably, the sulfur source is provided by elemental sulfur and/or NaHS and most preferably by a mixture of elemental sulfur and NaHS. Optionally, if hydrogen sulfide is available, it can be adsorbed in aqueous NaOH to form a solution of sodium sulfide and/or sodium hydrosulfide, depending upon the amount of hydrogen sulfide adsorbed.

The amount of total sulfur in the alkaline aqueous medium is critical in obtaining the desired polysulfurized polyalkaline product having a sulfur content of more than about 30 weight percent. Hence the alkaline aqueous medium should contain more than about 1 mole of total sulfur per mole of adduct, more preferably more than about 1.4 moles of total sulfur per mole of adduct and most preferably in the range of from 1.5 to 1.7 moles of total sulfur per mole of adduct. In a particularly preferred embodiment, the ratio of the gram atoms of elemental sulfur to moles of NaHS is in the range of from 0.01 : 1 to 0.25 : 1, preferably from 0.04 : 1 to 0.2 : 1 and most preferably from 0.08 : 1 to 0.1 : 1. With regard to the amount of adduct charged to the reaction vessel, the most preferred ratio of NaHS to adduct is in the range of from 1.3 : 1 to 1.5 : 1; and the most preferred ratio of S to adduct is in the range of from 0.05 : 1 to 0.3 : 1.

When NaHS and elemental sulfur are used as the sulfur source, the aqueous medium further comprises a basic solution, typically a metal hydroxide or alkaline earth metal hydroxide. In a particularly preferred embodiment, the alkaline aqueous medium comprises more than 0.7 mole of NaOH per mole of adduct, preferably more than 0.8 mole of NaOH per mole of adduct, and most preferably in the range of from 0.9 to 1.0 mole of NaOH per mole of adduct.

The amount of alkanol can vary over a wide range. A useful range is 0.2 - 0.8 parts by weight per each part by weight of adduct. A more preferred range is 0.4 - 0.65 parts by weight per each part of adduct.

The alcohol employed in the invention can either be a virgin alcohol or a mixture of virgin alcohols and recycle alcohols obtained as a distillate from a previous sulfurization reaction. In a preferred embodiment, the alcohol is a recycle alcohol containing from 85 - 100 weight percent n-propanol and from 0 - 15 weight percent tert-butanol. It is particularly preferred to utilize a recycle n-propanol containing about 10 weight percent t-butanol.

In addition to the alkanol and sulfur source, the alkaline medium also contains an amount of water sufficient to form the alkaline aqueous medium. Typically the total amount of water in the alkaline medium is, on a weight basis, substantially equal to the amount of adduct added to the aqueous medium. The water may be added with the sulfur source, the metal hydroxide or the alkaline earth metal hydroxide, the alkanol, or any combination of two or all three of the foregoing. Optionally, free water may be added to the alkaline medium taking into account the amount of water entering the alkaline medium from any of the foregoing sources.

The sequence of addition of the sulfur source, alkanol, and water to the alkaline aqueous medium is not critical to the invention. Hence, each of the foregoing may be added in any order or in any combination. The adduct, however, is preferably added after forming the alkaline aqueous medium containing the sulfur source, alkanol and water. It is, of course, understood that additional water may be added to the alkaline aqueous medium after addition of the adduct in order to obtain the desired amount of water in the aqueous medium.

It may be desirable to add an anti-foaming agent to the aqueous medium prior to, during, or after the addition of the adduct. When it is desirable to add such an antifoam agent the antifoam agent thus selected should be compatible with the aqueous medium and product formed. Hence, any of the well known antifoam agents may be used. It has been found that antifoam B (Dow Corning Company) is particularly suitable for use as an antifoam agent in the process of this invention.

Prior to addition of the adduct, the alkaline aqueous medium is typically heated to above 50°C, preferably above 60°C, most preferably 70°C. When the aqueous medium reaches the desired temperature, the adduct is added with agitation over an extended period of time. The agitation rate for the medium is not critical to the invention as long as the agitation rate is sufficient to maintain the components of the medium and adduct in suspension so that there is sufficient contact between the adduct and the sulfur source. Depending on the batch size, the period of time for adduct addition may be up to 10 hours or more. It is particularly preferred, however, to add the adduct at a constant rate over a period of 2 - 4 hours. The rate of addition of the adduct is not critical as long as the adduct is added to the medium over a period of at least about 2 hours. During the addition of the adduct, the temperature of the medium will rise from about 70 ° C to reflux. The rate of addition of the adduct is dependent on the ability of the equipment to maintain the temperature at reflux during the adduct addition.

The period of time the mixture is maintained at reflux temperature is preferably 2 - 4 hours or longer. After, step b) the temperature of the mixture is increased to effectively strip the alkanol from the reaction mass. The temperature required to strip the alcohol from the mixture is dependent on the particular alcohol mixture and the pressure utilized in the stripping operation. It is highly desirable that the alcohol be stripped under vacuum at a temperature in the range of from 85 ° C to 100°C and most preferably 90° to 95°C. During the stripping operation a subatmospheric pressure may be applied and the stripping operation continued until the pressure reaches 508 - 584.2 mm (20 - 23 inches) Hg vacuum. Once a vacuum of about 584.2 mm (23 inches) of mercury is obtained, the vacuum source is cut off and an amount of water is added with agitation to the stripped mixture. Upon termination of the agitation, a separate aqueous phase thus forms. The amount of water added to form the aqueous phase is in the range of from 60 to 100 wt.% of the weight of adduct initially charged.

Subsequent to the water addition and agitation for 10 to 30 minutes, the agitation is terminated and the reaction medium is allowed to settle in order to form two phases, an aqueous phase containing alcohol and water and an organic phase containing the polysulfurized polyalkylene polymer. Once the organic and aqueous phases are formed, the aqueous phase is separated from the organic phase by decantation or other mechanical means, and the organic phase is heated to remove residual water. Typically the organic phase is heated to a temperature in the range of from 100° to 120°C and under a reduced pressure of 508-711.2 mm (20-28 inches) of Hg for 10 minutes to an hour. The product is then recovered by conventional methods such as filtration and centrifugation.

The exact structure of the polysulfurized polyalkylene product is not known, but it is believed to be a polymeric product containing polyalkylene sulfur bridged structures.

The following examples are presented to illustrate the invention.

### Example 1

### Addition of Sulfur Monochloride to Isobutylene

Liquid sulfur monochloride, (135.0 grams), was charged into a suitable reaction flask equipped with a stirrer, thermometer, a condenser maintained at 5°C and a sub-surface gas sparger. Thereafter, gaseous isobutylene was bubbled into the reaction flask below the surface of the sulfur monochloride liquid while stirring to bring the temperature up to about 55°C. A total of 187.9 grams of isobutylene was added. The adduct thus formed was a clear amber oil.

### Example 2 is presented for comparative purposes.

### Example 2

### Preparation of Polysulfurized Polyalkylene Polymer

A reaction flask is charged with 108.4 grams of water, 3.6 grams of elemental sulfur, 1/2 a dropper of antifoam B, 368.0 grams isopropanol, 150.2 grams of 50 weight percent aqueous sodium hydroxide, and 393.3 grams of 35 weight percent aqueous NaHS. The mixture is stirred and heated under nitrogen to 70°C at which time 513 grams of the isobutylene-sulfur monochloride adduct of Example 1 is added subsurface over a 4 hour period while maintaining the reaction mass at reflux (76° -84°C). Heat is continued at reflux for two hours and then the alcohol is stripped out by heating up to 90°C at atmospheric pressure. Following the atmospheric strip, the pressure is reduced to 584.2 mm (23 inches) of Hg while allowing the flask to cool to about 72°C to complete the removal of the alcohol and most of the water. To the resulting product is added 300 grams of water which, after stirring for 10 minutes is allowed to settle for 5 minutes. The lower aqueous brine layer is separated and the organic layer is vacuum stripped (711.2 mm, 28 inches Hg) at 100°C. After filtering the stripped organic layer through a bed of diatomaceous earth, a clear yellow oil is obtained. Analysis of product made by the foregoing procedure typically has a viscosity in the range of 7.0 to 8.0 cSt at 100°C, a sulfur content of 44 - 47 weight percent, chlorine content of 0.7 - 0.75 weight percent and a copper corrosion weight loss (CCT) of 35 - 85 miligrams per 100 mL of sample.

### Examples 3 and 4 illustrate the process of this invention.

### Example 3

A reaction flask is charged with 173.7 grams of water, 8.4 grams of elemental sulfur, 1/2 a dropper of antifoam B, 261.0 grams of reagent grade n-propanol, 29.0 grams of reagent grade t-butanol, 143.4 grams of 50 weight percent aqueous sodium hydroxide, and 409.3 grams of 35 weight percent aqueous NaHS. The mixture is stirred at 700 rpm and heated under nitrogen to 70°C at which time 503.7 grams of the isobutylene-sulfur monochloride adduct of Example 1 is added subsurface over a 2 hour period while maintaining the reaction mass at reflux (92 - 94°C). Heat is continued at reflux for four hours and then the alcohol is stripped out by heating up to 100°C at atmospheric pressure. Following the atmospheric strip, the pressure is reduced to 584.2 mm (23 inches) of Hg while allowing the flask to cool to about 72°C to complete the removal of the alcohol and most of the water. To the resulting product is added 300 grams of water which, after stirring for 10 minutes is allowed to settle for 5 minutes. The lower aqueous brine layer is separated and the organic layer is vacuum stripped (584.2 mm, 28 inches Hg) at 100°C. After filtering the stripped organic layer through a bed of diatomaceous earth, a clear yellow oil weighing 315.8 grams was obtained. Analysis of a product made by the foregoing procedure had a viscosity of 7.8 cSt at 100°C, a sulfur content of about 45.8 weight percent, chlorine content of 500 ppm and a CCT of about 45.1 miligrams per 100 mL of sample.

### Example 4

Polysulfurized polyalkylene polymer product was made by the procedure of Example 3. After filtering the stripped organic layer through a bed of diatomaceous earth, a clear reddish-yellow oil weighing 318.3 grams was obtained. Analysis of a product made by the foregoing procedure has a viscosity of 8.3 cSt at 100°C, a sulfur content of about 45.8 weight percent, chlorine content of 700 ppm and a CCT of about 42.9 miligrams per 100 mL of sample.

To determine copper corrosion weight loss (CCT) a weighed copper strip is immersed in the polysulfurized poly-alkylene product of this invention for three hours at 121°C. The corrosion scale is removed using 10 percent sodium cyanide solution and the copper strip is re-weighed to determine the weight loss.

The polysulfurized olefins of the invention are especially useful as extreme pressure additives for lubricating oil formulations, especially in gear applications. The base oils can be of mineral or synthetic origin. Synthetic oils include, in particular, olefin oligomers such as decene trimer, tetramer and pentamer made by oligomerizing 1-decene using a BF₃ catalyst. Useful olefin oligomers can be made using other catalysts such as the aluminum alkyl Ziegler catalyst. Likewise, other olefins can be used such as C₆₋₁₄ 1-olefins.

In this application, the sulfurized olefin products of the invention are added in amounts sufficient to improve the extreme pressure property of the lubricant. Amounts of from 0.2 to 10.0 weight percent based on the total weight of the additized lubricant are usually sufficient.

These additives can be used in combination with other conventional additives which perform various functions. Examples of such other additives are corrosion inhibitors for ferrous and non-ferrous metals such as tetrapropenyl succinic acid and bis-(2,5-alkyldithio)-1,3,4-thiadiazoles as well as antiwear additives such as alkyl or aryl phosphonates, phosphites, thiophosphates, dithiophosphates, and phosphoric acids. Also zinc dialkyl or diaryl dithiophosphate, chlorinated hydrocarbons, sulfurized fatty esters and amines can be added.

## Claims

1. A process for preparing, in high yield, a polysulphurised polyalkylene product having a chlorine content of less than 1000 ppm and a sulphur content of more than about 30 weight percent comprising:
a) contacting an adduct of a sulphur halide and an olefin with a sulphur source in an alkaline aqueous medium comprising water and a lower alkanol having a boiling point of greater than about 85°C selected from n-propanol and a mixture of n-propanol and t-butanol;
b) maintaining the so contacted adduct at reflux for a period of time which is of more than 1.5 hours and which is sufficient to form a mixture having an aqueous phase containing alkanol and water and an organic phase containing a polysulphurised polyalkylene product having a chlorine content of less than 1000 ppm;
c) stripping the alkanol; and
d) heating the organic phase to remove residual water to obtain, in high yield, the polysulphurised polyalkylene product.

2. A process according to claim 1, wherein the sulphur source is S, NaHS or S and NaHS.

3. A process according to claim 2, wherein the molar ratio of NaHS to adduct is from 1.3:1 to 1.5:1 and the ratio of S to adduct is from 0.05:1 to 0.3:1.

4. A process according to any one of claim 1 to 3, wherein the alkanol comprises 90 weight percent n-propanol and 10 weight percent t-butanol, the sulphur halide is sulphur monochloride and the olefin is isobutylene.

5. A process according to any one of claim 1 to 4, wherein the amount of alkanol used is 0.2 and 0.8 parts by weight per part by weight adduct.

6. A process according to claim 5, wherein the amount of alkanol used is 0.4 to 0.65 parts by weight per part by weight adduct.

7. A polysulphurised polyalkene lubrication oil additive which imparts extreme pressure properties, obtainable by the process claimed in any one of claims 1 to 6.

8. Use of an alkaline aqueous medium comprising water and a lower alkanol having a boiling point of greater than about 85°C selected from n-propanol and a mixture of n-propanol and t-butanol in a process for preparing, in high yield, a polysulphurised polyalkylene product having a chlorine content of less than 1000 ppm and a sulphur content of more than about 30 weight percent, the process comprising:
a) contacting an adduct of a sulphur halide and an olefin with a sulphur source in the alkaline aqueous medium;
b) maintaining the so contacted adduct at reflux and for a period of time which is of more than 1.5 hours and which is sufficient to form a mixture having an aqueous phase containing alkanol and water and an organic phase containing a polysulphurised polyalkylene product having a chlorine content of less than 1000 ppm;
c) stripping the alkanol; and
d) heating the organic phase to remove residual water to obtain, in high yield, the polysulphurised polyalkylene product.

## Patentansprüche

1. Verfahren zur Herstellung eines polysulfurierten Polyalkylenprodukts in hoher Ausbeute mit einem Chlorgehalt von weniger als 1000 ppm und einem Schwefelgehalt von mehr als etwa 30 Gew.-%, bei dem man
a) ein Addukt aus einem Schwefelhalogenid und einem Olefin in einem alkalischen wäßrigen Medium, das Wasser und ein niederes, aus n-Propanol und einem Gemisch aus n-Propanol und tert-Butanol ausgewähltes Alkanol mit einem Siedepunkt von mehr als 85°C umfaßt, mit einer Schwefelquelle in Kontakt bringt;
b) das auf diese Weise in Kontakt gebrachte Addukt für einen Zeitraum am Rückfluß hält, der mehr als 1,5 Stunden beträgt und ausreicht, um ein Gemisch mit einer wäßrigen, Alkanol und Wasser enthaltenden Phase und einer ein polysulfuriertes Polyalkylenprodukt mit einem Chlorgehalt von weniger als 1000 ppm enthaltenden organischen Phase herzustellen,
c) das Alkanol abtreibt und
d) die organische Phase erhitzt, um rückständiges Wasser zu entfernen und das polysulfurierte Polyalkylenprodukt in hoher Ausbeute zu erhalten.

2. Verfahren nach Anspruch 1, bei dem die Schwefelquelle S, NaHS oder S und NaHS ist.

3. Verfahren nach Anspruch 2, bei dem das Molverhältnis von NaHS zum Addukt 1,3 : 1 bis 1,5 : 1 und das Molverhältnis von S zum Addukt 0,05 : 1 bis 0,3 : 1 beträgt.

4. Verfahren nach einem der Ansprüche 1 bis 3, bei dem das Alkanol 90 Gew.-% n-Propanol und 10 Gew.-% tert-Butanol umfaßt, das Schwefelhalogenid Schwefelmonochlorid ist und das Olefin Isobutylen ist.

5. Verfahren nach einem der Ansprüche 1 bis 4, bei dem die eingesetzte Alkanolmenge 0,2 und 0,8 Gewichtsteile pro Gewichtsteil Addukt beträgt.

6. Verfahren nach Anspruch 5, bei dem die eingesetzte Alkanolmenge 0,4 bis 0,65 Gewichtsteile pro Gewichtsteil Addukt beträgt.

7. Polysulfuriertes Polyalken-Schmieröladditiv, das Eigenschaften zur Verwendung bei extremem Druck verleiht und durch das Verfahren nach einem der Ansprüche 1 bis 6 hergestellt wird.

8. Verwendung eines alkalischen wäßrigen Mediums, das Wasser und ein niederes, aus n-Propanol und einem Gemisch aus n-Propanol und tert-Butanol ausgewähltes Alkanol mit einem Siedepunkt von mehr als 85°C umfaßt, in einem Verfahren zur Herstellung eines polysulfurierten Polyalkylenprodukts in hoher Ausbeute mit einem Chlorgehalt von weniger als 1000 ppm und einem Schwefelgehalt von mehr als etwa 30 Gew.-%, bei dem man
a) ein Addukt aus einem Schwefelhalogenid und einem Olefin in einem alkalischen wäßrigen Medium mit einer Schwefelquelle in Kontakt bringt;
b) das auf diese Weise in Kontakt gebrachte Addukt für einen Zeitraum am Rückfluß hält, der mehr als 1,5 Stunden beträgt und ausreicht, um ein Gemisch mit einer wäßrigen, Alkanol und Wasser enthaltenden Phase und einer ein polysulfuriertes Polyalkylenprodukt mit einem Chlorgehalt von weniger als 1000 ppm enthaltenden organischen Phase herzustellen,
c) das Alkanol abtreibt und
d) die organische Phase erhitzt, um rückständiges Wasser zu entfernen und das polysulfurierte Polyalkylenprodukt in hoher Ausbeute zu erhalten.

## Revendications

1. Procédé pour la préparation, en un haut rendement, d'un produit consistant en un polyalkylène polysulfuré ayant une teneur en chlore inférieure à 1000 ppm et une teneur en soufre supérieure à environ 30 % en poids, comprenant :
a) la mise en contact d'un produit d'addition d'un halogénure de soufre et d'une oléfine avec une source de soufre dans un milieu aqueux alcalin comprenant de l'eau et un alcanol inférieur ayant un point d'ébullition supérieur à environ 85°C choisi entre le n-propanol et un mélange de n-propanol et de tertio-butanol ;
b) le maintien du produit d'addition, ainsi mis en contact, au reflux pendant un temps qui est supérieur à 1,5 heure et qui est suffisant pour la formation d'un mélange comprenant une phase aqueuse contenant l'alcanol et l'eau et une phase organique contenant un produit consistant en un polyalkylène polysulfuré ayant une teneur en chlore inférieure à 1000 ppm ;
c) l'entraînement de l'alcanol ; et
d) le chauffage de la phase organique pour éliminer l'eau résiduelle afin d'obtenir, en un haut rendement, le produit consistant en un polyalkylène polysulfuré.

2. Procédé suivant la revendication 1, dans lequel la source de soufre consiste en S, NaHS ou bien S et NaHS.

3. Procédé suivant la revendication 2, dans lequel le rapport molaire du NaHS au produit d'addition est compris dans l'intervalle de 1,3:1 à 1,5:1 et le rapport de S au produit d'addition est compris dans l'intervalle de 0,05:1 à 0,3:1.

4. Procédé suivant l'une quelconque des revendications 1 à 3, dans lequel l'alcanol comprend 90 % en poids de n-propanol et 10 pour cent en poids de tertio-butanol, l'halogénure de soufre consiste en monochlorure de soufre et l'oléfine consiste en isobutylène.

5. Procédé suivant l'une quelconque des revendications 1 à 4, dans lequel la quantité d'alcanol utilisée est comprise dans l'intervalle de 0,2 à 0,8 partie en poids par partie en poids de produit d'addition.

6. Procédé suivant la revendication 5, dans lequel la quantité d'alcanol utilisée est comprise dans l'intervalle de 0,4 à 0,65 partie en poids par partie en poids de produit d'addition.

7. Additif ou huile lubrifiante consistant en un polyalcène polysulfure, qui confère des propriétés extrême pression, pouvant être obtenu par le procédé suivant l'une quelconque des revendications 1 à 6.

8. Utilisation d'un milieu aqueux alcalin comprenant de l'eau et un alcanol inférieur ayant un point d'ébullition supérieur à environ 85°C choisi entre le n-propanol et un mélange de n-propanol et de tertio-butanol dans un procédé pour la préparation, en un haut rendement, d'un produit consistant en un polyalkylène polysulfure ayant une teneur en chlore inférieure à 1000 ppm et une teneur en soufre supérieure à environ 30 pour cent en poids, le procédé comprenant :
a) la mise en contact d'un produit d'addition d'un halogénure de soufre et d'une oléfine avec une source de soufre dans le milieu aqueux alcalin,
b) le maintien du produit d'addition, ainsi mis en contact, au reflux et pendant un temps qui est supérieur à 1,5 h et qui est suffisant pour la formation d'un mélange comprenant une phase aqueuse contenant l'alcanol et l'eau et une phase organique contenant un produit consistant en un polyalkylène polysulfuré ayant une teneur en chlore inférieure à 1000 ppm ;
c) l'entraînement de l'alcanol ; et
d) le chauffage de la phase organique pour éliminer l'eau résiduelle afin d'obtenir, en un haut rendement, le produit consistant en un polyalkylène polysulfuré.
